# EUROPEAN PATENT APPLICATION

(11) **EP 4 550 739 A1**
(43) Date of publication of application: **07.05.2025**
(21) Application number: 24208091.9
(22) Date of filing: 22.10.2024
(51) Int. Cl.: H04L 41/044, H04L 43/04, H04L 43/08

(54) **END-TO-END NETWORK MONITORING**

(30) Priority: 30.10.2023 FI 20236203
(71) Applicant: Nokia Solutions and Networks Oy, 02610 Espoo (FI)
(72) Inventor: PHAM VAN, Quan, Murray Hill (US); CHOI, Nakjung, Florham Park (US); KAK, Ahan, Summit (US); THIEU, Huu Trung, New Providence (US)
(74) Representative: Nokia EPO representatives

(57) **Abstract**

To enable end-to-end performance monitoring, different solutions to obtain end-to-end values for different key performance indicators are disclosed. For example, when key performance indicator data from a plurality of different domains is received, the key performance indicator data received may be adapted to be a time-series data stream. Then, values of key performance indicators may be extracted, per a domain, from the time-series data stream. An end-to-end value for a key performance indicator may be determined, based on the extracted values of the key performance indicator in the different domains. The end-to-end value may be used for end-to-end performance monitoring of a network.

## Description

### TECHNICAL FIELD

Various example embodiments relate to communication systems.

### BACKGROUND

Communication systems are under constant development. The 5G, 5G-Advanced, and beyond future wireless networks, or network generations, aim to support a large variety of services, use cases and industrial verticals. With the rise of 5G and upcoming 6G and beyond services deploying virtualized and disaggregated multi-vendor environments operating in the cloud, network infrastructure has become more diverse and distributed, resulting to a wide range of network components, domains and their interactions to monitor. Enhancements, for example enhancements easing end-to-end monitoring, are desired.

### SUMMARY

The independent claims define the scope, and different embodiments are defined in dependent claims.

According to an aspect there is provided an apparatus comprising at least one processor, and at least one memory storing instructions that, when executed by the at least one processor, causes the apparatus at least to: receive key performance indicator data from a plurality of different domains; adapt the key performance indicator data received to be a time-series data stream; extract, per a domain, from the time-series data stream, values of key performance indicators; and determine, per a key performance indicator, using a preset rule for the key performance indicator, based on the extracted values of the key performance indicator in the different domains, an end-to-end value for the key performance indicator, said end-to-end value being usable for end-to-end performance monitoring of a network.

In an embodiment, combinable with any aspect and any other embodiment, the at least one memory and the instructions are configured to, with the at least one processor, cause the apparatus further to: determine, per a domain, a delivery type of the key performance indicator data; subscribe, when the delivery type of a domain is a batch, or a data stream, the key performance indicator data from the domain to receive the key performance indicator data; and poll periodically, when the delivery type of a domain is a request based delivery, the domain to receive the key performance indicator data.

In an embodiment, combinable with any aspect and any other embodiment, the at least one memory and the instructions are configured to, with the at least one processor, cause the apparatus further to: access report configuration information; determine, per a report, based on the report configuration information, at least key performance indicators whose end-to-end values are to be included in the report; generate reports by including, per a report, at least end-to-end values of the key performance indicators determined; and transmit the reports.

In an embodiment, combinable with any aspect and any other embodiment, the at least one memory and the instructions are configured to, with the at least one processor, cause the apparatus further to: determine, per a report, based on the report configuration information, whether to include to the report any of the values of the key performance indicators extracted; and include, when a value extracted is determined to be included, the value to the report, when generating the report.

In an embodiment, combinable with any aspect and any other embodiment, the report configuration information comprises a plurality of report configurations, a report configuration per a predetermined use case for the end-to-end values, predetermined use cases comprising use cases for performance management, use cases for data analytics, use cases for security management, use cases for network configuration management, or use cases for event-based management.

In an embodiment, combinable with any aspect and any other embodiment, the at least one memory and the instructions are configured to, with the at least one processor, cause the apparatus further to: determine, per a report recipient, whether a reception type is a batch or a stream; and transmit, per a report, the report using batch delivery to recipients whose reception type is the batch and using streaming to recipients whose reception type is the stream.

In an embodiment, combinable with any aspect and any other embodiment, the at least one memory and the instructions are configured to, with the at least one processor, cause the apparatus further to: receive, from a report recipient, a subscription of a report, the subscription defining one or more use cases to report; and update the report configuration information correspondingly.

In an embodiment, combinable with any aspect and any other embodiment, the at least one memory and the instructions are configured to, with the at least one processor, cause the apparatus further to: store at least the end-to-end values to a data warehouse; and access at least data comprising the end-to-end values in the data warehouse when generating the reports.

In an embodiment, combinable with any aspect and any other embodiment, the at least one memory and the instructions are configured to, with the at least one processor, cause the apparatus further to: store, per a domain, the values of the key performance indicators extracted to the data warehouse.

In an embodiment, combinable with any aspect and any other embodiment, the at least one memory and the instructions are configured to, with the at least one processor, cause the apparatus further to: determine from the plurality of the different domains, based on a preset rule, domains whose values are to be stored.

In an embodiment, combinable with any aspect and any other embodiment, the at least one memory and the instructions are configured to, with the at least one processor, cause the apparatus further to: receive, from an orchestration entity of the network, a request for key performance indicators; determine domains comprised in the network; acquire, per a domain, key performance indicators to which values are determined in the domain; and transmit in a response to the request information of the key performance indicators.

In an embodiment, combinable with any aspect and any other embodiment, the at least one memory and the instructions are configured to, with the at least one processor, cause the apparatus further to: repeat determining domains comprised in the network and acquiring the key performance indicators; and transmit, upon detecting a change in one or more key performance indicators in a domain or a change in the domains, change information indicating said change to the orchestration entity.

In an embodiment, combinable with any aspect and any other embodiment, the at least one memory and the instructions are configured to, with the at least one processor, cause the apparatus further to: receive from the orchestration entity of the network one or more end-to-end key performance service models; and determine from the one or more end-to-end key performance service models one or more preset rules for the key performance indicators.

In an embodiment, combinable with any aspect and any other embodiment, the at least one memory and the instructions are configured to, with the at least one processor, cause the apparatus further to: update, when an instructions to update an end-to-end key performance service model is received from the orchestration entity of the network, the model and corresponding one or more preset rules according to the instruction; and delete, when an instructions to delete an end-to-end key performance service model is received from the orchestration entity of the network, the model and corresponding one or more preset rules according to the instruction.

According to an aspect there is provided a system comprising at least one processor, and at least one memory storing instructions that, when executed by the at least one processor, causes the system at least to: receive key performance indicator data from a plurality of different domains; adapt the key performance indicator data received to be a time-series data stream; extract, per a domain, from the time-series data stream, values of key performance indicators; determine, per a key performance indicator, using a preset rule for the key performance indicator, based on the extracted values of the key performance indicator in the different domains, an end-to-end value for the key performance indicator; and use at least said end-to-end value to perform end-to-end performance monitoring of a network.

In an embodiment, combinable with any aspect and any other embodiment, the at least one memory and the instructions are configured to, with the at least one processor, cause the apparatus further to: access report configuration information; determine, per a report, based on the report configuration information, at least key performance indicators whose end-to-end values are to be included in the report; generate reports by including, per a report, at least end-to-end values of the key performance indicators determined; and transmit the reports.

In an embodiment, combinable with any aspect and any other embodiment, the at least one memory and the instructions are configured to, with the at least one processor, cause the apparatus further to: receive, from an orchestration entity of the network, a request for key performance indicators; determine domains comprised in the network; acquire, per a domain, key performance indicators to which values are determined in the domain; and transmit in a response to the request information of the key performance indicators.

According to an aspect there is provided a method comprising: receiving key performance indicator data from a plurality of different domains; adapting the key performance indicator data received to be a time-series data stream; extracting, per a domain, from the time-series data stream, values of key performance indicators; and determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.

According to an aspect there is provided a computer readable medium comprising instructions which, when executed by an apparatus, cause the apparatus to perform at least: receiving key performance indicator data from a plurality of different domains; adapting the key performance indicator data received to be a time-series data stream; extracting, per a domain, from the time-series data stream, values of key performance indicators; and determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.

According to an aspect there is provided a non-transitory computer readable medium comprising instructions which, when executed by an apparatus, cause the apparatus to perform at least: receiving key performance indicator data from a plurality of different domains; adapting the key performance indicator data received to be a time-series data stream; extracting, per a domain, from the time-series data stream, values of key performance indicators; and determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.

According to an aspect there is provided a computer program comprising instructions, which, when executed by an apparatus, cause the apparatus to perform at least: receiving key performance indicator data from a plurality of different domains; adapting the key performance indicator data received to be a time-series data stream; extracting, per a domain, from the time-series data stream, values of key performance indicators; and determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.

### BRIEF DESCRIPTION OF DRAWINGS

Embodiments are described below, by way of example only, with reference to the accompanying drawings, in which
Fig. 1 illustrates an exemplified high-level architecture;
Fig. 2 is a flow chart illustrating an example functionality;
Fig. 3 is a flow chart illustrating an example functionality;
Fig. 4 illustrates an example of information exchange;
Fig. 5 illustrates an example of information exchange;
Fig. 6 is a high-level example of an end-to-end monitoring integration fabric components;
Fig. 7 is a schematic block diagram; and
Fig. 8 is a schematic block diagram.

### DETAILED DESCRIPTION OF SOME EMBODIMENTS

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first signal could be termed a second signal, and similarly, a second signal could be also termed a first signal without departing from the scope of the present disclosure.

5G (fifth generation), 5G-Advanced, and beyond future wireless networks, aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification, short-packet communication, and blockchain technologies. For example, in the network slicing multiple independent and dedicated network slice instances may be created within the same infrastructure to run services that have different requirements on latency, reliability, throughput and mobility.

It is envisaged that key features of 6G (sixth generation) will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

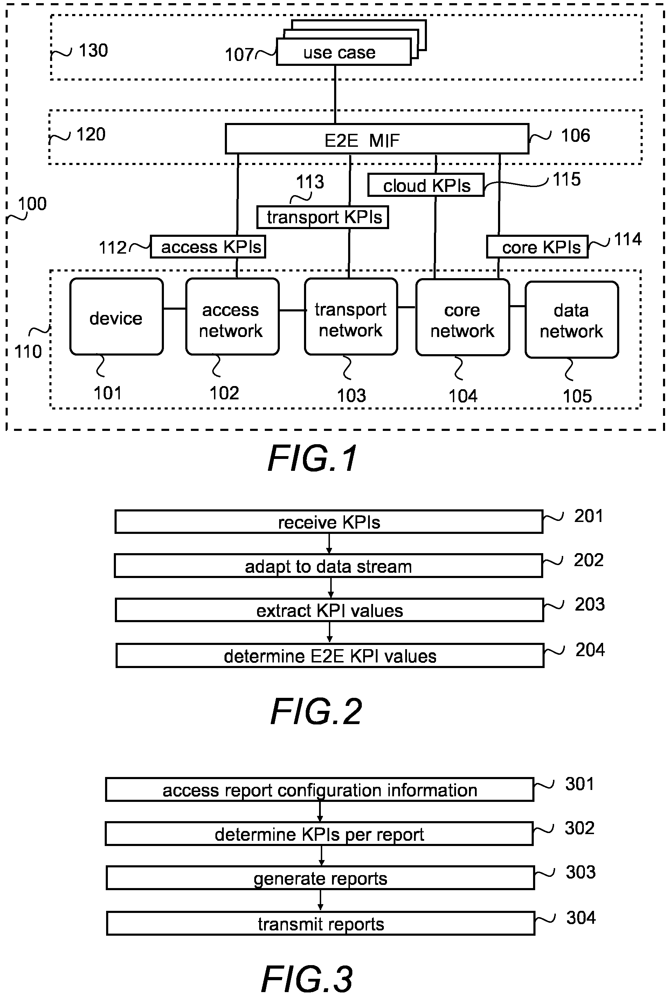

Fig. 1 illustrates an exemplified high-level network architecture only showing some functional entities, all being logical units, whose implementation may differ from what is shown. The connections shown in Fig. 1 are logical connections; the actual physical connections may be different.

Referring to Fig. 1, a system 100 providing tools for end-to-end assurance comprises one or more wireless networks 110, an end-to-end monitoring platform 120, and a network orchestration platform 130.

A wireless network 110 comprises device components 101 for device functionalities in one or more device domains, access network components 102 for access network functionalities in one or more access network domains and/or in one or more cloud domains, transport network component 103 for transport network functionalities in one or more access network domains and/or in one or more cloud domains, core network components 104 for core network functionalities in one or more core network domains 104 and/or in one or more cloud domains, and data network components 105 for data network functionalities in data network domain.

A device component 101 may be any electrical device, or apparatus, connectable to an access network. A non-limiting list of examples of device components 101 comprises a user equipment, a smart phone, an internet of things device, an industrial internet of things device, a consumer internet of things device, an on-person device, a wearable device, such as a smart watch, a smart ring, an eHealth related device, a medical monitoring device, a sensor, such as pressure sensor, a humidity sensor, a thermometer, a motion sensor, an actuator, an accelerometer, etc., a surveillance camera, a vehicle, automated guided vehicles, autonomous connected vehicles etc.

An access network may be any kind of an access network, that is able to provide access to device components and deliver services between devices and data networks. An access network may be a wireless access network, such as a cellular access network, for example 5G-Advanced network or a new radio networks, a non-terrestrial network, a legacy cellular radio access network, for example a long term evolution advanced (LTE Advanced, LTE-A) network, or 3G network, or a non-cellular access network, for example a wireless local area network. To provide the access, the access network comprises apparatuses, such as access devices, as access network components 102. There are a wide variety of access devices, including access devices providing wireless access, such as different types of base stations, such as as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc. At least some of the apparatuses in the access network may provide an abstraction platform to separate abstractions of network functions from the processing hardware.

The transport network components 103 form one or more transport networks between access networks and core networks, wherein a transport network provides connection services. A transport network, and the transport network components 103, may use any technology, for example an optic based technology and/or internet protocol based technology, that enable radio access networks and core networks to deliver network services between devices and data networks. A non-limiting list of examples of transport network components 103 comprises access routers, metro edge gateways, metro aggregation edge gateways, metro backbone routers, and backbone routers towards the core networks.

The core network components 104 form one or more core networks. A core network may be based on a non-standalone core network, for example an evolved packet core network, or a standalone access network, for example a 5G core network. However, it should be appreciated that the core network, and the core network components 104, may use any technology that enable network services to be delivered between devices and data networks.

A data network may be any network, like the internet, an intranet, a wide area network, etc. Different remote monitoring and/or data collection services for different use cases may be reached via the data network and the data network components 105.

The different domains may manage their resources autonomously and collect different kind of key performance indicators, KPIs. For example, there may be access KPIs 112, core KPIs 114, transport KPIs 113 and cloud KPIs 115. Non-limiting examples of the access KPIs 112 include mobile access KPIs and fixed access KPIs. The access KPIs may include as 4G/5G/6G radio KPIs, slice KPIs, vendor proprietary KPIs, infrastructure system KPIs, packet data network KPIs, wireless local are network KPIs, etc. The transport KPIs 113 may include KPIs for optic transport and/or for Internet protocol (IP) based transport. Non-limiting examples of the transport KPIs include reconfigurable optical add-drop multiplexer KPIs, optical transport module KPIs, optical channel KPIs, physical impairment KPIs, layer 2/layer 3 virtual private network KPIs, multiprotocol label switching KPIs, segment routing KPIs, slice KPIs, open configuration KPIs, vendor proprietary KPIs, infrastructure system KPIs, etc. The core KPIs 114 depends naturally on the type of the core network. For example, core KPIs 114 for 5G core may include user plane function KPIs, network function compute resource KPIs, slice KPIs, vendor proprietary KPIs, infrastructure system KPIs, etc. The cloud KPIs 115 may include Prometheus KPIs, Jaeger KPIs, application KPIs, slice KPIs, vendor proprietary KPIs, infrastructure system KPIs, etc. It should be appreciated that even though in example of Fig. 1 the cloud KPIs 115 are collected from core network components in one or more cloud domains, cloud KPIs may be collected correspondingly from access network components and transport network components in cloud domain(s). In other words, there is a vast number of different domain-specific KPIs that represent performance of domain-specific services, possibly in a proprietary-specific format.

The end-to-end monitoring platform 120 comprises one or more end-to-end monitoring integration fabric (E2E MIF) entities 106. An end-to-end monitoring integration fabric entity 106 provides one or more programmable abstractions for network monitoring. An end-to-end monitoring integration fabric entity 106 may be implemented in one or more apparatuses. Different examples of an end-to-end monitoring , or its sub-entities, or corresponding functionalities will be described in more detail below. Depending on an implementation, the end-to-end monitoring integration fabric entity 106 may comprise different components or sub-entities for providing specific functionalities, and functions performed by one component (sub-entity) may be different in different implementations. In an implementation, the end-to-end monitoring integration fabric 106 may comprise an end-to-end KPI value determining component (E2E KPI determiner) to determine end-to-end values for one or more key performance indicators. Further, non-limiting examples of components include end-to-end key performance indicator service models, end-to-end key performance indicator service models life-cycle management, end-to-end key performance indicator subscription management, end-to-end key performance indicator reporting, end-to-end key performance extract-load-transform-process, end-to-end key performance indicator service producer(s), domain adapter management, communication enablers between different components and/or underlying domains (domain systems). In other words, the end-to-end monitoring, enabled by the one or more end-to-end monitoring integration fabric (E2E MIF) entities 106, provides a comprehensive approach to ensuring the entire network infrastructure's performance, functionality, and security from an end-to-end perspective. Hence, one may say that the end-to-end monitoring is crucial to network management tasks.

The end-to-end monitoring provided by the end-to-end monitoring platform 120 may be part of end-to-end network assurance. The end-to-end monitoring may be seen even as a key enabler for the end-to-end network assurance, by observing an end-to-end system's performance from one domain to another and analyzing end-to-end network performance from a source of data to its destination. This gives critical insights into how the network, or the system, operates across different services, nodes, and connections, providing full visibility into the network's functionality. Furthermore, by monitoring the network's performance and identifying potential issues before they become critical, end-to-end monitoring as part of the end-to-end network assurance can help prevent network downtime, data breaches, and other security incidents.

The network orchestration platform 130 comprises different use case applications 107 for different purposes, e.g. use cases for performance management, use cases for data analytics, use cases for security management, use cases for network configuration management, and/or use cases for event-based management. A use case may be for a service/slice fulfilment, automation, assurance, root cause analysis, artificial intelligence/machine learning, etc. The use case applications, even use case applications for a same purpose, may use different key performance indicators. For example, end-to-end network automation solutions may be improved faster and more accurately, e.g. by generating and providing batch datasets of end-to-end key performance indicators to be used for training and validating machine learning models, or by generating and providing streams of end-to-end key performance indicators to be used for machine learning models inferencing. A non-limiting list of machine learning use cases include machine learning - based anomaly detection, key performance indicator prediction, soft-failure prediction, etc. Further, the end-to-end monitoring integration fabric 106 enables quick adaptations of machine learning model(s) based use cases, for example when a machine learning model is improved by changing key performance indicators used, e.g. by adding a new key performance indicator, or deleting a key performance indicator. Different reporting, root cause and/or service impact analysis use cases can utilize unified inventory/data source(s) provided by one or more the end-to-end monitoring integration fabrics 106 to feed diverse assurance processes, thereby enabling end-to-end performance monitoring and fast troubleshooting by combining and exploiting any data in the system and without defining in the orchestration platform how to obtain end-to-end key performance indicators, or corresponding data.

Furthermore, the end-to-end monitoring integration fabric 106 may be based on centralized data aggregation/processing, which reduces data processing cost and is able to provide with the use cases in the orchestration platform 107 end-to-end network monitoring as a service.

Fig. 2 illustrates an example functionality of an end-to-end monitoring integration fabric entity, or its component, depending on an implementation and component(s) comprised in the end-to-end monitoring integration fabric entity.

Referring to Fig. 2, the entity at least receives (block 201) key performance indicator data from a plurality of different domains. In one implementation, when the data may be received from, or delivered by, the domains in different delivery types, the receiving may include determining, per a domain, a delivery type of the key performance indicator data, and then performing the receiving based on the delivery type. For example, when the delivery type of a domain is a batch (batch delivery), key performance indicator data may be subscribed from the domain to receive the key performance indicator data. Correspondingly, when the delivery type of a domain is a data stream, the key performance indicator data may be subscribed from the domain to receive the key performance indicator data. When the delivery type of a domain is a request based delivery, the domain may be polled periodically to receive the key performance indicator data.

Regardless of the delivery type, the key performance indicator data received is adapted (block 202) to be a time-series data stream. In a time-series data stream data collected over a time is in the data stream according to its collection time. For example, a batch data, or polled data, may be adapted to be a time-series data stream by forwarding pieces of data from the oldest data to the newest data. Naturally, if the data stream received is already a time-series data stream, no adaptation may take place.

Then the entity extracts (block 203), per a domain, from the time-series data stream, values of key performance indicators. In other words, domain-specific values of key performance indicators are extracted. Then, per a key performance indicator, an end-to-end value for the key performance indicator is determined (block 204) using a preset rule, or preset rules, for the key performance indicator. The preset rule may be to add values to each other, or to provide the values from different domains with different weights, and then calculate a sum of the weighted values, just to mention couple of non-limiting examples of what a preset rule may be. The end-to-end value determined is based on the extracted values of the key performance indicator in the different domains, combined according to the one or more preset rules for the key performance indicator. It should be appreciated that different key performance indicators may share same one or more preset rules, or have their own one or more preset rules. At the end of the process of Fig. 2, there is a plurality of end-to-end values for a plurality of key performance indicators, a value per a key performance indicator, and the use cases may use different combinations of the values, according to key performance indicator(s) used in a corresponding use case when performing end-to-end performance monitoring of a network.

The process of Fig. 2 may be continuous, or repeated at certain intervals.

Fig. 3 illustrates another example functionality of an end-to-end monitoring integration fabric entity, or its component, depending on an implementation and component(s) comprised in the end-to-end monitoring integration fabric entity. In the example of Fig. 3 it is assumed that end-to-end values for key performance indicators are available. In other words, it is assumed that the process of Fig. 2 has been performed either earlier or at the start of the process in Fig. 3. A further assumption made is that report configuration information is existing and accessible to the entity.

Referring to Fig. 3, the entity accesses (block 301) report configuration information. The report configuration information may be maintained in a separate data warehouse or data lake, which may locate on any cloud accessible to the entity. The report configuration information comprises report configurations for use cases using the end-to-end values of one or more key performance indicators. Hence, there is a plurality of report configurations, a report configuration per a predetermined use case for the end-to-end values. A non-limiting list of examples of the predetermined use cases comprises use cases for performance management, use cases for data analytics, use cases for security management, use cases for network configuration management, and/or use cases for event-based management.

Then it is determined (block 302), per a report, based on the report configuration information, at least key performance indicators whose end-to-end values are to be included in the report. Further, in some implementations, it is determined (bock 302), per a report, based on the report configuration information, whether to include to the report any of the values of the key performance indicators extracted, i.e. whether to include domain-specific values. Then reports are generated (block 303) by including, per a report, at least end-to-end values of the key performance indicators determined to be included to the report. In some implementations generating (block 303) the reports further comprises including, when a value extracted is determined to be included, the value to the report. The reports generated are then transmitted (block 304). The recipients then use the reports, or more precisely at least one or more end-to-end values of one or more key performance indicators, to perform end-to-end network performance monitoring according to use case(s).

It should be appreciated that the process may repeat generating and transmitting reports using earlier determined information on content of the reports. In other words, blocks 303 and 304 may be repeated while blocks 301 and 302 may be performed once, or less frequently.

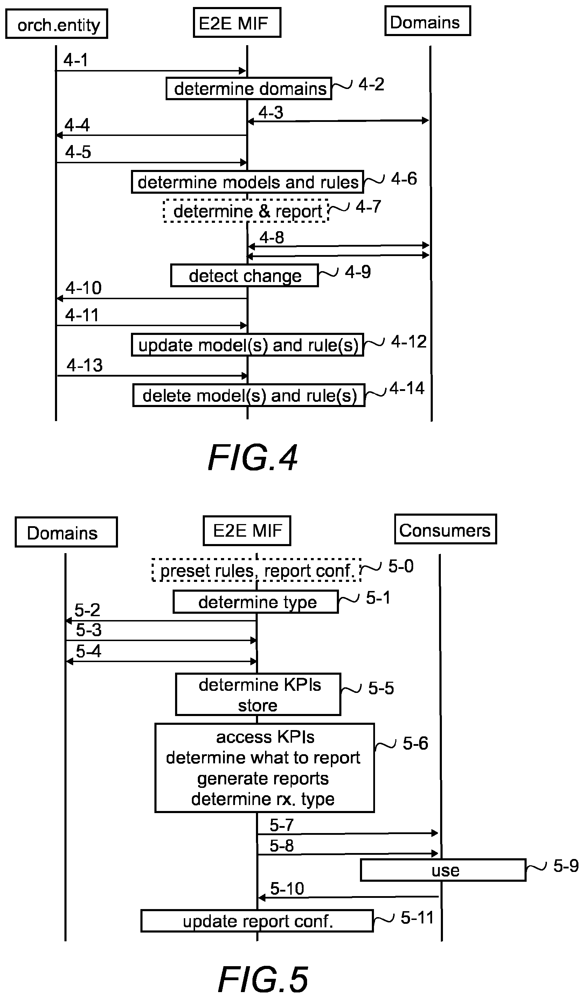

Fig. 4 illustrates a highly simplified example of information exchange relating to key performance model management for end-to-end monitoring of a network.

Referring to Fig. 4, an orchestration entity of the network transmits (message 4-1) a request for key performance indicators to an end-to-end monitoring integration fabric entity, E2E MIF. For example, a developer/modeler of an operator may define, via the orchestration entity, a new use case that needs at least end-to-end values for one or more key performance indicators. One may say, to design an end-to-end key performance service model, a developer/modeler may request, via the orchestration entity by inputting corresponding user input, key performance indicators supported by a domain from each domain in the network, even without knowing the domains.

When the end-to-end monitoring integration fabric entity receives the request for key performance indicators, it determines (block 4-2) domains comprised in the network, and acquires (depicted in Fig. 4 by one message 4-3 for the sake of clarity), per a domain, key performance indicators to which values are determined in the domain. In other words, the end-to-end monitoring integration fabric entity may retrieve or request the key performance indicators from the domains of the network, the domains including, for example, one or more access network domains and one or more core network domains. Then the end-to-end monitoring integration fabric entity transmits in a response (message 4-4) to the request information of the key performance indicators. The end-to-end monitoring integration fabric entity, or its domain adapter component(s), may also expose a common set of monitoring execution application programming interfaces, APIs (e.g. creation, update, deletion, and get), to enable properties of monitoring execution to be domain specific.

The key performance indicators may be displayed, or otherwise output to the developer, for example, which then designs and defines one or more end-to-end key performance models (service models). Once the models are ready, or a model is ready, a user input is received (not illustrated in Fig. 4) causing that the model(s) is(are) transmitted (message 4-5) from the orchestration entity to the end-to-end monitoring integration fabric entity. A thus created end-to-end key performance model is an abstracted, and may contain a list of end-to-end key performance indicators that, or whose values are derived, calculated, and transformed from domain key performance indicators. An end-to-end key performance indicator's end-to-end value may indicate if a service/slice service level agreement is met. Different models may present various parameters with different granularity and frequency. An end-to-end value can be calculated from values of one or multiple key performance indicators, that may be different, from one domain or from different domains. For example, the model may define that a latency of an end-to-end slice will be computed by the sub-slice latency measurements from network domains.

When the end-to-end monitoring integration fabric entity receives (message 4-5) from the orchestration entity of the network the one or more end-to-end key performance service models, the end-to-end monitoring integration fabric entity determines (block 4-6), from the one or more end-to-end key performance service models, one or more preset rules for the key performance indicators. Message 4-5 may be an upload message, resulting that the one or more end-to-end key performance service models are stored to a data warehouse, for example to a data warehouse indicated in the upload message.

Then the end-to-end monitoring integration fabric entity determines (block 4-7) end-to-end values for key performance indicators, as described above with Fig. 2 and/or will be described below with Fig. 5, according to the rules, and reports (block 4-7) end-to-end values, as described above with Fig. 3 and/or will be described below with Fig. 5, according to the rules.

In the illustrated example, the end-to-end monitoring integration fabric entity repeats (messages 4-8) determining domains comprised in the network and acquiring the key performance indicators, and transmits, upon detecting a change (block 4-9) in one or more key performance indicators in a domain and/or a change in the domains, change information (message 4-10) indicating said change to the orchestration entity.

The changes, e.g. new or changed key performance indicators and/or domains may be displayed (not illustrated in Fig. 4), or otherwise output to the developer, for example, which then updates one or more end-to-end key performance models, or create new models. In the illustrated example it is assumed that one or more existing models are updated for the sake of description. Creating/adding new models follows the procedure described with message 4-5 and block 4-6. Once updates to one or more models are ready, a corresponding user input received causes that updates to the model(s) are transmitted (message 4-11) from the orchestration entity to the end-to-end monitoring integration fabric entity. Message 4-11 may be an instructions to update one or more end-to-end key performance service models. It should be appreciated that updates may be sent for other reasons too, i.e. without receiving information on changes (without message 4-10), for example based on changed needs on a use case.

When the end-to-end monitoring integration fabric entity receives (message 4-11) from the orchestration entity of the network the instruction to update one or more end-to-end key performance service models, the end-to-end monitoring integration fabric entity updates (block 4-6), the one or more end-to-end key performance service models and corresponding one or more preset rules according to content in the instruction received.

Further, in the illustrated example of Fig. 4, an instruction (message 4-13) to delete one or more end-to-end key performance service models is transmitted from the orchestration entity (message 4-11) to the end-to-end monitoring integration fabric entity. When the instructions to delete one or more end-to-end key performance service models is received from the orchestration entity of the network, the one or more model and corresponding one or more preset rules are deleted (block 4-14) according to the instruction. It should be appreciated that an instruction to delete one or more models may be due to a change in a domain, i.e. due to information received in message 4-10.

Using the above information exchange it is possible to design the end-to-end key performance indicators for implementation of different use cases. It should be appreciated that a use-case implementation may use one or multiple end-to-end key performance indicator service models.

The process can be that after a designer has designed an end-to-end key performance service model, the end-to-end key performance service model designed may be onboarded onto the end-to-end monitoring integration fabric via a REST API provided by the end-to-end key performance service model management. The end-to-end key performance service model management may decompose end-to-end key performance indicators into specific domain key performance indicators and generate a service producer specification, including stream and batch mechanism reports. Further, the end-to-end key performance service model management may, depending on a use case implantation, subscribe stream and/or polling and/or batch mechanism. The end-to-end key performance service model management may also generate specification that describe how domain key performance indicators are extracted and transformed into end-to-end key performance indicators. The end-to-end key performance service model management may generate and return a service consumer SDK to be used by the developer to implement the use cases. The service consumer SDK is a generic component with specific end-to-end key performance indicator service model plugins, which may be installed as needed. Similar procedure may be applied when an existing end-to-end key performance indicator service model is updated.

Fig. 5 illustrates a highly simplified example of information exchange relating to end-to-end key performance indicator reporting. In the illustrated example, "consumer" means a report recipient. The report recipient may be a plugin, for example the service consumer SDK, or a corresponding tool or orchestration entity, which a developer can use to implement one or more use cases to perform end-to-end monitoring.

In the illustrated example of Fig. 5, it is assumed that an end-to-end monitoring integration fabric entity, E2E MIF, comprises (block 5-0) or have access to one or more end-to-end key performance service models, or at least to corresponding one or more preset rules, for example defined according to the example in Fig. 5, and to report configuration information (report conf.) The report configuration information may comprise a plurality of report configurations, for example a report configuration per a predetermined use case for the end-to-end values.

Referring to Fig. 5, the E2E MIF determines (block 5-1), per a domain, a delivery type of the key performance indicator data the domain uses. When the delivery type of a domain is a batch, or a data stream, the E2E MIF subscribes (message 5-2) the key performance indicator data from the domain and receives (message 5-3) the key performance indicator data from the domain according to the subscription. When the delivery type of a domain is a request based delivery, the E2E MIF polls (message 5-4) periodically the domain to receive the key performance indicator data.

The E2E MIF determines (block 5-5) end-to-end values of end-to-end key performance indicators using the received key performance indicator data, for example as described above with Fig. 2. Further, in the illustrated example, at least the end-to-end values of the key performance indicators are stored (block 5-5) to a data warehouse. Depending on an implementation, the E2E MIF may store (block 5-5), per a domain, the values of the key performance indicators extracted from data stream of the domain to the data warehouse, from all domains or from a subset of domains, according to corresponding end-to-end key performance service indicator models, for example. Instead, or in addition to, the E2E MIF may determine from the plurality of the different domains, based on a preset rule, domains whose values are to be stored.

When it is time to report at least the end-to-end values to a use case, or to a plurality of use cases, the E2E MIF accesses (block 5-6) at least data comprising the end-to-end values in the data warehouse when generating (block 5-6) the reports, for example as described above with Fig. 3. When identical reports are subscribed, the E2E MIF may generate one report that it will transmit to a plurality of consumers (report recipients). Then, in the illustrated example, the E2E MIF determines (block 5-6), per a report recipient (per a consumer), whether a reception (rx) type is a batch or a stream, and transmits, per a report, the report using batch delivery (message 5-7) to consumers (recipients) whose reception type is the batch and using streaming (message 5-8) to consumers (recipients) whose reception type is the stream. The consumers then uses (block 5-9) the reports, e.g. end-to-end values for key performance indicators, according to monitoring use-cases.

Further, in the illustrated example of Fig. 5, a developer subscribes a report, which causes that a consumer (a report recipient) transmits (message 5-10) a subscription of a report, the subscription defining one or more use cases to report. It should be appreciated that message 5-10 may also be a cancellation of a subscription, or containing an update to an existing subscription. The E2E MIF updates (block 5-11) the report configuration information correspondingly, i.e. according to the content of message 5-10.

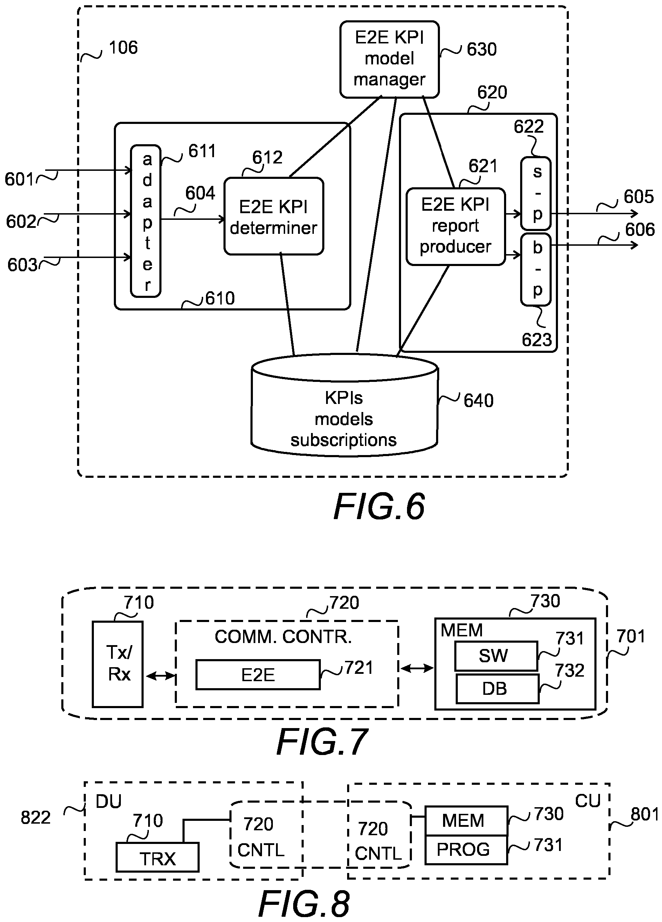

Fig. 6 illustrates a non-limiting high-level example of an end-to-end monitoring integration fabric components. It should be appreciated that single components are used for the sake of clarity of description, and the end-to-end monitoring integration fabric may comprise a plurality of corresponding components. The modular architecture of the example of Fig. 6 provides building blocks and flexibility under various deployment scenarios.

Referring to Fig. 6, the end-to-end monitoring integration fabric 106 comprises an end-to-end key performance indicator extract, load and transform, E2E KPI ELT, component 610, an end-to-end key performance indicator report producer component 620, an end-to-end key performance indicator model manager component 630 and a data warehouse 640.

The E2E KPI ELT component 610 comprises in the example of Fig. 6 an adapter 611 and an end-to-end key performance indicator determiner 612. The adapter 611 is configured to receive from different data sources (domains) data in data streams 601, or in batches 602, or by polling 603, and to adapt the received data to one or more time-series data streams 604 that the end-to-end key performance indicator determiner 612 is configured to receive. In other words, the adapter 611, which may be called a domain adapter, enables communication between the end-to-end monitoring integration fabric 106 and underlying domain systems.

The end-to-end key performance indicator determiner 612 is configured to perform an end-to-end key performance indicator extract load and transform, EK-ELT, processing operation, which is a data integration process. The data integration process first extracts domain key performance indicators from different time-series data streams 604 of domain key performance indicator(s) data and loads this key performance indicator, KPI, data into the data warehouse 640, for example loading, per a domain, KPIs to the domain's own table/collection. Further, the end-to-end key performance indicator determiner 612 is configured to transform the domain key performance indicator(s) data into a predefined end-to-end key performance indicator, KPI, data, for example to end-to-end KPI values, and to load the end-to-end KPI data into the data warehouse 640. One may say that the end-to-end key performance indicator determiner integrates data from multiple domains into a single end-to-end key performance indicator service model representation, per a model.

Even though not illustrated in Fig. 6, the end-to-end key performance indicator determiner 612 may comprise one or more user interfaces, for example graphical user interfaces, which allow a user, e.g. a developer, to modify/change any portion of the process, for example data transformation process by changing a formula, or a preset rule, of an end-to-end key performance indicator.

In the illustrated example of Fig. 6, a service producer component 620 comprises an end-to-end key performance indicator report producer 621, a stream producer (s-p) 622, and a batch producer (b-p) 623. The end-to-end key performance indicator report producer 621 is configured generate reports comprising one or more end-to-end values for at least one key performance indicator, per a subscription (subscribed report), for example as described above with Fig. 3, and deliver the report as a stream 605 through the stream producer 622, or as a batch sent through the batch producer 623. The end-to-end key performance indicator report producer 621 may be configured to generate for subscriptions having identical report content, one report which will be used to deliver identical reports through the stream producer 622 and/or through the batch producer 623, depending on a subscribed delivery type. In other words, the service producer component 620 is configured to deliver at least end-to-end values for key performance indicators to user case applications according to a corresponding subscriptions, to be used for further processing and handling, e.g. for end-to-end monitoring. Since the reporting supports both streaming and batch delivery approaches a wide range of use cases can be supported.

In the illustrated example of Fig. 6, an end-to-end key performance indicator model manager component 630 is configured to manage, per an end-to-end key performance indicator service model, a life-cycle of said model, including model creation, uploading the model to the data warehouse 640, updating the model, and deletion of the model. Further, in the illustrated example, the end-to-end key performance indicator model manager component 630 is configured to manage subscription request for the reports from the user case applications, including processing the subscriptions e.g. to determine, per a subscription, content of a report to be generated and its delivery type, uploading the processed subscription to the data warehouse 640, updating the subscription, and deletion of the subscription.

Although not illustrated in the example of Fig. 6, there may be a separate domain adapter management component, configured to interact with the adapter 611 and with the end-to-end key performance indicator model manager component 630, or the adapter 611 and/or the end-to-end key performance indicator model manager component 630 may be configured to perform at least part of corresponding functionality. The domain adapter management component may be configured to translate end-to-end key performance indicator monitoring requirements into one or more specific monitoring methods provided by network domains to be implemented via corresponding domain adapters.

The data warehouse 640 may be a single, consistent data warehouse or data lake, that at least the end-to-end key performance indicator determiner 612, the end-to-end key performance indicator report producer 621, and the end-to-end key performance indicator model manager component 630 can access to upload (store) or download (retrieve, acquire) data.

As can be seen from the above examples, the described framework provides a tool that simplifies the complexity of the underlying network infrastructure and enables to design and develop a wide variety of use-case applications to address network orchestration needs, with each application potentially requiring different end-to-end key performance metrics by the abstraction and programmability provided by the end-to-end key performance integration fabric entities.

The blocks, related functions, and information exchange (messages, signaling) described above by means of Fig. 1 to Fig. 6 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 7 illustrates an apparatus 701 that may be configured to perform any functionality of an apparatus described herein. The apparatus 701 may be or comprised in or comprise a platform entity or component, examples of which are listed above. Fig. 8 illustrates an apparatus that may implement distributed functionality of the apparatus illustrated in Fig. 7.

The apparatus 701 may comprise one or more communication control circuitry 720, such as at least one processor, and at least one memory 730, including one or more algorithms 731, such as a computer program code (software) wherein the at least one memory and the computer program code (software) are configured, with the at least one processor, to cause the apparatus to carry out any one of the exemplified functionalities of a corresponding apparatus, entity or component, described above with any of Fig. 1 to Fig. 6. Said at least one memory 730 may also comprise at least one database 732.

Referring to Fig. 7, the one or more communication control circuitries 720 of the apparatus 701 comprise at least an end-to-end (E2E) circuitry 721 which is configured to perform related functionalities relating to end-to-end key performance indicators, e.g. extract values of key performance indicators, determine end-to-end values, or perform reporting to use-case application, or manage models. To this end, the end-to-end circuitry 721 of the apparatus 701 is configured to carry out at least some of the functionalities described above, e.g., by means of Fig. 1 to Fig. 6, using one or more individual circuitries.

Referring to Fig. 7, the memory 730 may be implemented using any suitable data storage technology, such as semiconductor based memory devices, flash memory, magnetic memory devices and systems, optical memory devices and systems, fixed memory and removable memory. Further, the memory may provide the data warehouse, for example.

Referring to Fig. 7, the apparatus 701 may further comprise different interfaces 710 such as one or more communication interfaces (TX/RX) comprising hardware and/or software for realizing communication connectivity according to one or more communication protocols. The one or more communication interfaces 710 may enable connecting to different domains, such as the Internet and/or to a core network of a wireless communications network and/or to a radio access network and/or to other apparatuses within range of the apparatus. The one or more communication interfaces 710 may provide the apparatus with communication capabilities to communicate in a cellular communication system and enable communication to different domains, network components or mobile apparatuses, e.g., terminal devices or user equipments, for example. The one or more communication interfaces 710 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 8, at least some of the functionalities of the apparatus of Fig. 7 may be shared between two physically separate devices, forming one operational entity. Therefore, the apparatus may be seen to depict the operational entity comprising one or more physically separate devices for executing at least some of the described processes. Thus, the apparatus of Fig. 8, utilizing such shared architecture, may comprise a control unit CU 820, or a remote control unit, such as a host computer or a server computer, operatively coupled (e.g. via a wireless or wired connection) to a remote distributed unit DU 822 located in the apparatus or in a remote head of the apparatus. In an embodiment, at least some of the described processes may be performed by the CU 820. In an embodiment, the execution of at least some of the described processes may be shared among the DU 822 and the CU 820.

Similar to Fig. 7, the apparatus of Fig. 8 may comprise one or more communication control circuitries (CNTL) 720, such as at least one processor, and at least one memory (MEM) 730, including one or more algorithms (PROG) 731, such as a computer program code (software) wherein the at least one memory and the computer program code (software) are configured, with the at least one processor, to cause the apparatus to carry out any one of the exemplified functionalities described above, e.g., by means of Fig. 1 to Fig. 6.

In embodiments, the CU 820 may generate a virtual network through which the CU 820 communicates with the DU 822. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into a server computer or a host computer (e.g. to the CU). External network virtualization is targeted to optimized network sharing. Another category is internal virtual networking which provides network-like functionality to the software containers on a single system.

In embodiments, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 6 or operations thereof.

According to an embodiment there is provided an apparatus comprising means for receiving key performance indicator data from a plurality of different domains; means for adapting the key performance indicator data received to be a time-series data stream; means for extracting, per a domain, from the time-series data stream, values of key performance indicators; and means for determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.

According to an embodiment there is provided a system comprising means for receiving key performance indicator data from a plurality of different domains; means for adapting the key performance indicator data received to be a time-series data stream; means for extracting, per a domain, from the time-series data stream, values of key performance indicators; and means for determining, per a key performance indicator, using a preset rule for the key performance indicator, based on the extracted values of the key performance indicator in the different domains, an end-to-end value for the key performance indicator; and means for using said end-to-end value for end-to-end performance monitoring of a network.

Embodiments and examples as described may also be carried out in the form of a computer process defined by a computer program or portions thereof. Embodiments of the functionalities described in connection with Fig. 1 to Fig. 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the claims. Therefore, all words and expressions should be interpreted broadly and they are intended to illustrate, not to restrict, the embodiment. It will be obvious to a person skilled in the art that, as technology advances, the inventive concept can be implemented in various ways within the scope of the independent claims. Further, it is clear to a person skilled in the art that the described embodiments may, but are not required to, be combined with other embodiments in various ways within the scope of the independent claims.

## Claims

1. An apparatus comprising at least one processor, and at least one memory storing instructions that, when executed by the at least one processor, causes the apparatus at least to:
receive key performance indicator data from a plurality of different domains;
adapt the key performance indicator data received to be a time-series data stream;
extract, per a domain, from the time-series data stream, values of key performance indicators; and
determine, per a key performance indicator, using a preset rule for the key performance indicator, based on the extracted values of the key performance indicator in the different domains, an end-to-end value for the key performance indicator, said end-to-end value being usable for end-to-end performance monitoring of a network.

2. The apparatus of claim 1, wherein the at least one memory and the instructions are configured to, with the at least one processor, cause the apparatus further to:
determine, per a domain, a delivery type of the key performance indicator data;
subscribe, when the delivery type of a domain is a batch, or a data stream, the key performance indicator data from the domain to receive the key performance indicator data; and
poll periodically, when the delivery type of a domain is a request based delivery, the domain to receive the key performance indicator data.

3. The apparatus of claim 1 or 2, wherein the at least one memory and the instructions are configured to, with the at least one processor, cause the apparatus further to:
access report configuration information;
determine, per a report, based on the report configuration information, at least key performance indicators whose end-to-end values are to be included in the report;
generate reports by including, per a report, at least end-to-end values of the key performance indicators determined; and
transmit the reports.

4. The apparatus of claim 3, wherein the at least one memory and the instructions are configured to, with the at least one processor, cause the apparatus further to:
determine, per a report, based on the report configuration information, whether to include to the report any of the values of the key performance indicators extracted; and
include, when a value extracted is determined to be included, the value to the report, when generating the report.

5. The apparatus of claim 3 or 4, wherein the report configuration information comprises a plurality of report configurations, a report configuration per a predetermined use case for the end-to-end values, predetermined use cases comprising use cases for performance management, use cases for data analytics, use cases for security management, use cases for network configuration management, or use cases for event-based management.

6. The apparatus of claim 3, 4 or 5, wherein the at least one memory and the instructions are configured to, with the at least one processor, cause the apparatus further to:
determine, per a report recipient, whether a reception type is a batch or a stream; and
transmit, per a report, the report using batch delivery to recipients whose reception type is the batch and using streaming to recipients whose reception type is the stream.

7. The apparatus of any preceding claim 3 to 6, wherein the at least one memory and the instructions are configured to, with the at least one processor, cause the apparatus further to:
receive, from a report recipient, a subscription of a report, the subscription defining one or more use cases to report; and
update the report configuration information correspondingly.

8. The apparatus of any preceding claim 3 to 7, wherein the at least one memory and the instructions are configured to, with the at least one processor, cause the apparatus further to:
store at least the end-to-end values to a data warehouse; and
access at least data comprising the end-to-end values in the data warehouse when generating the reports.

9. The apparatus of claim 8, wherein the at least one memory and the instructions are configured to, with the at least one processor, cause the apparatus further to:
store, per a domain, the values of the key performance indicators extracted to the data warehouse.

10. The apparatus of claim 9, wherein the at least one memory and the instructions are configured to, with the at least one processor, cause the apparatus further to:
determine from the plurality of the different domains, based on a preset rule, domains whose values are to be stored.

11. The apparatus of any preceding claim, wherein the at least one memory and the instructions are configured to, with the at least one processor, cause the apparatus further to:
receive, from an orchestration entity of the network, a request for key performance indicators;
determine domains comprised in the network;
acquire, per a domain, key performance indicators to which values are determined in the domain; and
transmit in a response to the request information of the key performance indicators.

12. The apparatus of claim 11, wherein the at least one memory and the instructions are configured to, with the at least one processor, cause the apparatus further to:
repeat determining domains comprised in the network and acquiring the key performance indicators; and
transmit, upon detecting a change in one or more key performance indicators in a domain or a change in the domains, change information indicating said change to the orchestration entity.

13. The apparatus of claim 11 or 12, wherein the at least one memory and the instructions are configured to, with the at least one processor, cause the apparatus further to:
receive from the orchestration entity of the network one or more end-to-end key performance service models; and
determine from the one or more end-to-end key performance service models one or more preset rules for the key performance indicators.

14. A method comprising:
receiving key performance indicator data from a plurality of different domains;
adapting the key performance indicator data received to be a time-series data stream;
extracting, per a domain, from the time-series data stream, values of key performance indicators; and
determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.

15. A computer program comprising instructions, which, when executed by an apparatus, cause the apparatus to perform at least:
receiving key performance indicator data from a plurality of different domains;
adapting the key performance indicator data received to be a time-series data stream;
extracting, per a domain, from the time-series data stream, values of key performance indicators; and
determining, per a key performance indicator, using a preset rule for the key performance indicator, based on the extracted values of the key performance indicator in the different domains, an end-to-end value for the key performance indicator, said end-to-end value being usable for end-to-end performance monitoring of a network.
